# EUROPÄISCHE PATENTANMELDUNG

(11) **EP 2 961 017 A1**
(43) Veröffentlichungstag der Anmeldung: **30.12.2015**
(21) Anmeldenummer: 14305991.3
(22) Anmeldetag: 24.06.2014
(51) Int. Cl.: H02G 15/34, H01B 12/00, H01R 4/68, H02G 1/00

(54) **Verfahren und Anordnung zum Aufbau eines supraleitfähigen Kabelsystems**

(71) Anmelder: Nexans, 75008 Paris (FR)
(72) Erfinder: Stemmle, Mark, 30625 Hannover (DE); Marzahn, Erik, 30853 LANGENHAGEN (DE)
(74) Vertreter: Feray, Valérie

(57) **Zusammenfassung**

Es wird ein Verfahren zum Aufbau eines supraleitfähigen Kabelsystems angegeben. Mit diesem Verfahren wird mindestens ein supraleitfähiges Kabel (2) in einem zum Führen eines Kühlmittel dienenden, rohrförmigen Kryostaten (3) angebracht, mit welchem der mit dem Kabel (2) bestückte Kryostat (3) zu einem Verlegeort transportiert wird und bei welchem das Kabel (2) und der Kryostat (3) am Verlegeort an beiden Enden mit Aggregaten verbunden werden. Das Kabel (3) wird in einem Kryostat (3) angebracht, der an beiden axialen Enden (3b, 3c) über das Kabel (2) hinausragt. Die Einheit aus Kabel (2) und Kryostat (3) wird zum Verlegeort transportiert. Die über das Kabel (2) hinausragenden Enden (3b, 3c) des Kryostats (3) werden am Verlegeort auf eine vorbestimmte Länge gekürzt. Das supraleitfähige Kabel (2) und der Kryostat (3) werden anschließend an die Aggregate angeschlossen.

## Beschreibung

Die Erfindung bezieht sich auf ein Verfahren zum Aufbau eines supraleitfähigen Kabelsystems, mit welchem mindestens ein supraleitfähiges Kabel in einem zum Führen eines Kühlmittel dienenden, rohrförmigen Kryostaten angebracht wird, mit welchem der mit dem Kabel bestückte Kryostat zu einem Verlegeort transportiert wird und bei welchem das Kabel und der Kryostat am Verlegeort an beiden Enden mit Aggregaten verbunden werden, sowie auf eine Anordnung zum Aufbau eines supraleitfähigen Kabelsystems.

Supraleitende Kabelsysteme kommen beispielsweise bei der Energieversorgung in städtischen Stromnetzen zum Einsatz. Sie erlauben bei ausreichend tiefen Temperaturen, bei denen der Gleichstromwiderstand des Leiters Null ist, die verlustfreie Übertragung elektrischer Energie über weite Strecken. Zum Kühlen des supraleitenden Kabels ist dieses in einem Kryostat angeordnet. Der Kryostat weist mindestens ein thermisch isoliertes Rohr auf, durch welches ein zum Betrieb des supraleitenden Kabels geeignetes Kühlmittel geleitet wird. Das Kühlmittel ist beispielsweise flüssiges Helium oder flüssiger Stickstoff. Das isolierte Rohr, welches das supraleitende Kabel umgibt, besteht beispielsweise aus zwei konzentrisch angeordneten, beispielsweise gewellten und auf Abstand gehaltenen Metallrohren, die eine Vakuumisolierung und meist auch andere Isoliermaterialien zwischen sich einschließen. Ein Kabelkryostat kann eine oder mehrere aneinander gereihte, mittels Vakuumsperren getrennte Vakuumkammern umfassen. Das isolierte Rohr kann auch aus einem von einem Isoliermaterial umgebenen Metallrohr bestehen.

An den Enden des supraleitenden Kabelsystems sind Endverschlüsse für den Anschluß an normale elektrische Leiter eines Stromnetzes oder Verbindungsstücke (auch Muffen genannt) für den Anschluß an weitere supraleitende Kabelsysteme festgelegt. Die Endverschlüsse und Muffen können mit Zugängen für die Verbindung mit einer Kühlanlage bzw. mit einem Durchflußsystem für das Kühlmittel ausgerüstet sein.

Bei der Herstellung solcher supraleitender Kabelsysteme wird der Kryostat auf die geforderte Länge konfektioniert und evakuiert. Die Enden des supraleitenden Kabels reichen zum Anschluß am Ort der Kabelverlegung etwas über den Kryostat hinaus. Das fertiggestellte Kabelsystem wird zur Lagerung und zum Transport gewöhnlich auf Kabeltrommeln gewickelt. Um die überstehenden Kabelenden bei der Lagerung, beim Transport und bei der Installation vor Beschädigung zu schützen, werden diese mit Schutzelementen versehen. Diese Schutzelemente können beispielsweise aus über die Kabelenden gestülpten Wellrohren bestehen. Sie werden während des Verlegens erst direkt vor dem Anschluß des Kabelsystems abgenommen.

Der Erfindung liegt die Aufgabe zugrunde, ein Verfahren zum Aufbau eines supraleitfähigen Kabelsystems sowie eine entsprechende Anordnung bereitzustellen, bei denen die Kabelenden beim Transport und bei der Installation wirksam geschützt werden.

Diese Aufgabe wird gemäß der Erfindung dadurch gelöst,
- daß das Kabel in einem Kryostat angebracht wird, der an beiden axialen Enden über das Kabel hinausragt,
- daß die Einheit aus Kabel und Kryostat zum Verlegeort transportiert wird,
- daß die über das Kabel hinausragenden Enden des Kryostats am Verlegeort auf eine vorbestimmte Länge gekürzt werden und
- daß das supraleitfähige Kabel und der Kryostat an die Aggregate angeschlossen werden.

Das erfindungsgemäße Verfahren sowie die erfindungsgemäße Anordnung erlauben einen wirksamen Schutz der Enden des supraleitfähigen Kabels während der Lagerung und des Transports des Kabelsystems. Das Anbringen einer separaten Schutzvorrichtung an das Kabelsystem entfällt, da die überstehenden Enden des Kryostats bereits als Schutzrohre für die Kabelenden dienen. Weiterhin ist es nicht erforderlich, die genaue Länge des Kryostats während der Herstellung des supraleitfähigen Kabelsystems zu kennen bzw. fertigzustellen. Der Kryostat wird erst am Ort des Verlegens auf die benötigte Länge angepaßt.

Nach einer besonders vorteilhaften Ausführungsform des Verfahrens wird ein Kryostat verwendet, der aus zwei konzentrisch und mit Abstand zueinander angeordneten Rohren aus Metall besteht und bei dem zwischen den beiden Rohren eine Vakuumisolierung angeordnet wird. An mindestens zwei mit axialem Abstand zueinander stehenden Positionen zwischen den beiden Rohren wird eine Vakuumsperre angebracht. Zwischen diesen Vakuumsperren wird ein Vakuum erzeugt. Mit Vorteil wird die Evakuierung zwischen den Vakuumsperren bereits am Herstellungsort vorgenommen. Am Verlegeort werden dann die überstehenden Enden des Kryostats auf die benötigte Länge gekürzt und zusammen mit den Kabelenden an die entsprechenden Aggregate angeschlossen.

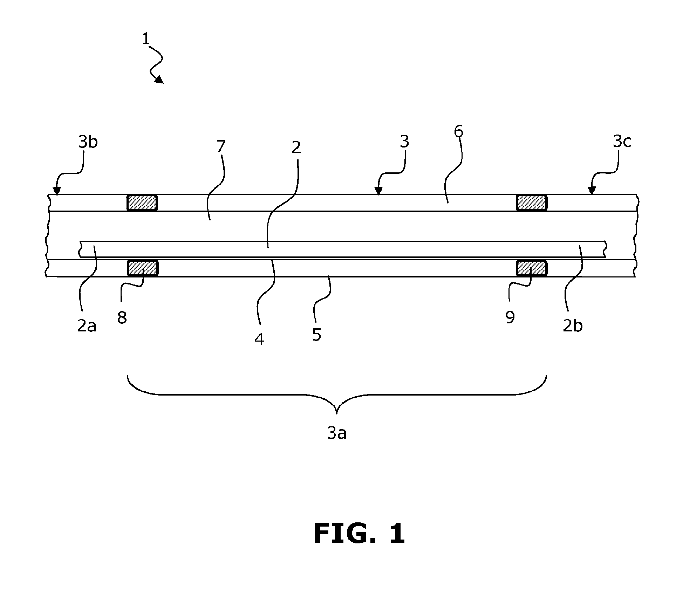

Das Verfahren und die Anordnung gemäß der Erfindung werden anhand der Zeichnung erläutert. Fig. 1 zeigt ein Ausführungsbeispiel einer Anordnung zum Aufbau eines supraleitfähigen Kabelsystems.

Die erfindungsgemäße Anordnung 1 weist ein supraleitfähiges Kabel 2 und einen rohrförmigen Kabelkryostat 3, in welchen das Kabel 2 eingebracht ist, auf. Der Aufbau des supraleitfähigen Kabels 2 und sein elektrischer Anschluß an weiterführende Teile sind hier nicht von Bedeutung, weshalb nicht genauer darauf eingegangen werden soll.

Der Kabelkryostat 3 besteht in dem dargestellten Ausführungsbeispiel aus zwei konzentrisch und mit Abstand zueinander angeordneten Rohren 4, 5 aus Metall. Die Metallrohre 4, 5 können beispielsweise quer zu ihrer Längsrichtung gewellt sein. Die Metallrohre 4, 5 werden durch Abstandshalter auf einem definierten Abstand gehalten. In dem Zwischenraum 6 zwischen den Metallrohren 4, 5 befindet sich eine Vakuumisolierung. Die Vakuumisolierung wird einerseits durch Evakuieren des Zwischenraums 6 und andererseits durch das Vorhandensein eines Isoliermaterials (nicht dargestellt) erreicht. Das Isoliermaterial kann beispielsweise aus einer Vielzahl von übereinander liegenden, einseitig mit Metall beschichteten Kunststofffolien bestehen, wobei die Metallseite nach außen weist, um möglicherweise einfallende Wärme durch Strahlung zu reflektieren.

Der Kryostat 3 umschließt sowohl das Kabel 2 als auch einen Freiraum 7, in dem im Betriebszustand ein fließfähiges Kühlmittel, beispielsweise flüssiger Stickstoff oder flüssiges Helium, geführt wird, um das supraleitfähige Kabel 2 auf Betriebstemperatur zu bringen und zu halten.

Nach der dargestellten Ausführungsform weist die Anordnung zwei Vakuumsperren 8, 9 auf, welche an zwei Positionen zwischen den beiden Rohren 4, 5 in dem Kabelkryostat 3 angebracht sind. Die Vakuumsperren 8, 9 bestehen jeweils aus einer hermetischen Dichtung zwischen den beiden Rohren 4, 5. Sie sind beispielsweise jeweils in der Nähe der Kabelenden 2a, 2b angebracht. Der Teil 3a des Kryostats 3 zwischen den beiden Vakuumsperren 8, 9 wird am Herstellungsort konfektioniert, und der von den Rohren 4, 5 und den Vakuumsperren 8, 9 gebildete, hermetisch geschlossene Raum wird ebenda evakuiert. Ein solches Teilstück 3a ist beispielsweise ungefähr 100 m lang. Der am Herstellungsort konfektionierte Kryostat kann auch mehrere Vakuumkammern umfassen, welche durch mehrere in bestimmten Abständen angeordnete Vakuumsperren gebildet werden.

Erfindungsgemäß ragt der Kryostat 3 an beiden axialen Enden 3b, 3c über das Kabel 2 hinaus. Die überstehen Enden 3b, 3c sind mindestens so lang, daß sie jeweils die Kabelenden 2a, 2b vollständig überdecken. Die Anordnung 1 wird in diesem Zustand gelagert und zum Ort des Verlegens transportiert. Dazu wird der mit dem Kabel 2 versehene, an dessen Enden 2a, 2b überstehende Kryostat 3 am Herstellungsort beispielsweise auf eine Kabeltrommel oder eine Spule aufgewickelt. Die Kabelenden 2a, 2b sind demnach während der Lagerung, des Transports und des Aufbaus des supraleitfähigen Kabelsystems durch den längeren Kryostaten 3 vor Beschädigung geschützt. Am Verlegeort wird die Anordnung 1 zum Aufbau eines supraleitfähigen Kabelsystems dann an beiden Enden mit Aggregaten (nicht dargestellt) verbunden.

Die Aggregate können beispielsweise aus Kabelverbindungsstücken oder Kabelendstücken bestehen. Damit kann das supraleitfähige Kabel 2 mit einem weiterführenden supraleitfähigen Kabel oder mit einem normalleitenden Kabel oder über eine entsprechend gestaltete Durchführung mit einer elektrischen Einrichtung, beispielsweise einem Stromnetz, verbunden sein. Die Aggregate weisen Anschlußstellen auf, um Vakuumpumpen anschließen zu können. Kabelverbindungsstücke erlauben beispielsweise den Durchfluß des Kühlmittels, während Kabelendstücke zum Anschluß der Anordnung an ein Kühlsystem, welches beispielsweise einen Kühlmittelvorratsraum enthält, geeignet sind.

Zum Anschluß an die Aggregate werden beide Enden 3b, 3c des Kryostats 3 auf eine vorbestimmte Länge gekürzt. Die Kabelenden 2a, 2b werden mittels elektrischen Verbindern mit weiterführenden Kabeln oder elektrischen Geräten verbunden. Die jeweiligen Enden des Metallrohre 4, 5 können dann beispielsweise durch Schweißen mit entsprechenden Anschlußstücken der Aggregate verbunden werden. Dadurch entstehen zwei, jeweils von einer Vakuumsperre, den Enden der Metallrohre 4, 5 und dem Aggregat gebildeten, hermetisch geschlossene Kammern oder Räume, welche im Vergleich zur Vakuumkammer des Teilstücks 3a der Anordnung relativ klein sind. Diese lassen sich anschließend am Ort des Verlegens auf einfache Weise evakuieren, nachdem die Anordnung 1 mit den Aggregaten verbunden worden ist. Dazu wird vor Ort eine Vakuumpumpe jeweils an die entsprechende Anschlußstelle des Aggregats angeschlossen.

Alternativ kann der Kabelkryostat auch aus einem mit einer thermischen Isolierung versehenen Rohr aus Metall bestehen. Die thermische Isolierung kann beispielsweise aus Vakuumpanelen oder aus einer Schaumisolierung bestehen.

## Patentansprüche

1. Verfahren zum Aufbau eines supraleitfähigen Kabelsystems, mit welchem mindestens ein supraleitfähiges Kabel (2) in einem zum Führen eines Kühlmittel dienenden, rohrförmigen Kryostaten (3) angebracht wird, mit welchem der mit dem Kabel (2) bestückte Kryostat (3) zu einem Verlegeort transportiert wird und bei welchem das Kabel (2) und der Kryostat (3) am Verlegeort an beiden Enden mit Aggregaten verbunden werden, **dadurch gekennzeichnet,**
- **daß** das Kabel (2) in einem Kryostat (3) angebracht wird, der an beiden axialen Enden (3b, 3c) über das Kabel (2) hinausragt,
- **daß** die Einheit aus Kabel (2) und Kryostat (3) zum Verlegeort transportiert wird,
- **daß** die über das Kabel (2) hinausragenden Enden (3b, 3c) des Kryostats (3) am Verlegeort auf eine vorbestimmte Länge gekürzt werden und
- **daß** das supraleitfähige Kabel (2) und der Kryostat (3) an die Aggregate angeschlossen werden.

2. Verfahren nach Anspruch 1, **dadurch gekennzeichnet,**
- **daß** ein Kryostat (3) verwendet wird, der aus zwei konzentrisch und mit Abstand zueinander angeordneten Rohren (4, 5) aus Metall besteht und bei dem zwischen den beiden Rohren (4, 5) eine Vakuumisolierung angeordnet wird, und
- **daß** an mindestens zwei mit axialem Abstand zueinander stehenden Positionen zwischen den beiden Rohren (4, 5) eine Vakuumsperre (8, 9) angebracht wird, zwischen welchen ein Vakuum erzeugt wird.

3. Verfahren nach Anspruch 2, **dadurch gekennzeichnet, daß** die nach dem Anschluß zwischen der am entsprechenden Ende (3b, 3c) des Kryostats (3) vorhandenen Vakuumsperre (8, 9) und dem Aggregat jeweils entstandenen Kammern evakuiert werden.

4. Verfahren nach Anspruch 1, **dadurch gekennzeichnet, daß** ein Kryostat verwendet wird, der aus einem mit einer thermischen Isolierung versehenen Rohr aus Metall besteht.

5. Anordnung (1) zum Aufbau eines supraleitfähigen Kabelsystems, in welcher mindestens ein supraleitfähiges Kabel (2) in einem zum Führen eines Kühlmittel dienenden, rohrförmigen Kryostaten (3) angebracht ist, mit welcher der mit dem Kabel (2) bestückte Kryostat (3) zu einem Verlegeort transportierbar ist und bei welcher das Kabel (2) und der Kryostat (3) am Verlegeort an beiden Enden mit Aggregaten verbindbar sind, **dadurch gekennzeichnet,**
- **daß** das Kabel (2) in einem Kryostat (3) angebracht ist, der an beiden axialen Enden (3b, 3c) über das Kabel (2) hinausragt und
- **daß** die über das Kabel (2) hinausragenden Enden (3b, 3c) des Kryostats (3) am Verlegeort auf eine vorbestimmte Länge kürzbar sind.

6. Anordnung (1) nach Anspruch 5, **dadurch gekennzeichnet,**
- **daß** der Kryostat (3) aus zwei konzentrisch und mit Abstand zueinander angeordneten Rohren (4, 5) aus Metall besteht und bei dem zwischen den beiden Rohren eine Vakuumisolierung angeordnet ist, und
- **daß** an mindestens zwei mit axialem Abstand zueinander stehenden Positionen zwischen den beiden Rohren (4, 5) eine Vakuumsperre (8, 9) angebracht ist.

7. Anordnung (1) nach Anspruch 5, **dadurch gekennzeichnet, daß** der Kryostat aus einem mit einer thermischen Isolierung versehenen Rohr aus Metall besteht.

8. Anordnung (1) nach einem der Ansprüche 5 bis 7, **dadurch gekennzeichnet, daß** die Aggregate Kabelverbindungsstücke oder Kabelendstücke umfassen.
